# FASCICULE DE BREVET EUROPEEN

(11) **EP 1 402 672 B1**
(45) Date de publication et mention de la délivrance du brevet: **11.05.2005**
(21) Numéro de dépôt: 02745476.8
(22) Date de dépôt: 03.06.2002
(51) Int. Cl.: H04J 14/08

(54) **DEMULTIPLEXEUR TEMPOREL OPTIQUE**
OPTISCHER ZEITLICHER DEMULTIPLEXER
OPTICAL TEMPORAL DEMULTIPLEXER

(30) Priorité: 05.06.2001 FR 0107304
(43) Date de publication de la demande: 31.03.2004
(73) Titulaire: FRANCE TELECOM, 75015 Paris (FR)
(72) Inventeur: PINCEMIN, Erwan, F-22290 Gommenec'h (FR)
(74) Mandataire: Joly, Jean-Jacques
(86) Numéro de dépôt international: PCT/FR2002/001862
(87) Numéro de publication internationale: WO 2002/100015

(56) Documents cités:
- WO-A-99/05812
- US-A- 5 831 752
- US-A1- 2001 007 506
- KURITA H ET AL: "ULTRAFAST ALL-OPTICAL SIGNAL PROCESSING WITH MODE-LOCKED SEMICONDUCTOR LASERS" IEICE TRANSACTIONS ON ELECTRONICS, INSTITUTE OF ELECTRONICS INFORMATION AND COMM. ENG. TOKYO, JP, vol. E81-C, no. 2, 1 février 1998 (1998-02-01), pages 129-138, XP000774553 ISSN: 0916-8524

## Description

### DOMAINE TECHNIQUE GENERAL.

L'invention concerne les démultiplexeurs temporels.

Plus particulièrement, elle concerne un démultiplexeur d'un signal optique multiplexé temporellement n'utilisant que des procédés tout-optique.

### ETAT DE L'ART.

Les capacités des réseaux optiques de hauts débits augmentent avec le développement des technologies de l'information. Les réseaux optiques utilisant les procédés de multiplexage temporel optique - ou Optical Time Division Multiplexing (OTDM) selon la terminologie anglo-saxonne généralement utilisée - et de multiplexage en longueur d'onde - ou Wavelength Division Multiplexing (WDM) - se développent.

De tels procédés de multiplexage nécessitent en sortie de transmission des procédés de démultiplexage ultra-rapides.

Généralement, les procédés de démultiplexage sont la modulation de phase croisée dans une fibre optique à dispersion décalée ou dans un miroir non linéaire en boucle, ou le mélange à quatre ondes dans une fibre a dispersion décalée ou dans un amplificateur à semi-conducteur. Un autre procédé de démodulation est la démodulation avec un modulateur à électro-absorption.

Les procédés précédents présentent cependant des inconvénients.

Ils sont souvent difficiles à mettre en oeuvre, car les dispositifs qu'ils utilisent comportent des éléments compliqués.

De plus, ils ne sont pas totalement passifs ni fondés sur un principe tout-optique.

### PRESENTATION DE L'INVENTION.

L'invention propose de pallier ces inconvénients.

Notamment, il est intéressant de proposer un dispositif de démultiplexage ne comportant que des éléments passifs et tout-optiques.

A cet effet, l'invention propose un dispositif de démultiplexage temporel d'un signal optique comportant un premier coupleur qui dédouble le signal optique à démultiplexer en deux signaux se propageant dans deux branches différentes du dispositif et un deuxième coupleur qui réunit les signaux issus des deux branches, caractérisé en ce qu'une branche comporte des moyens de traitement pour obtenir à l'entrée du deuxième coupleur un signal sous forme d'impulsions lumineuses ayant un taux de répétition fonction du signal que l'on veut obtenir en sortie du dispositif, ces impulsions étant légèrement en avance de phase par rapport au signal que l'on veut démultiplexer, et en ce que l'intensité des impulsions lumineuses est apte à saturer un milieu absorbant s'étendant après le deuxième coupleur.

L'invention est avantageusement complétée par les caractéristiques suivantes, prises seules ou en une quelconque de leur combinaison techniquement possible :
- les moyens de traitement comportent des moyens pour transformer le signal optique issu du premier coupleur en un signal électrique, des moyens de synchronisation pour que ledit signal électrique ait un taux de répétition identique au taux binaire du signal à démultiplexer, des moyens diviseurs de fréquence, des moyens pour introduire un décalage temporel entre les deux signaux se propageant dans les branches et une source laser ;
- les moyens de transformation du signal optique en signal électrique comportent une photodiode ;
- les moyens de synchronisation comportent des moyens aptes à reconstituer un signal d'horloge de synchronisation ;
- les moyens formant horloge sont à grand facteur de qualité ;
- les moyens diviseurs de fréquence divisent la fréquence du signal issu des moyens de synchronisation par un multiple de deux ;
- la source laser est commandée par le signal électrique dont la fréquence a été divisée et qui a été décalé ; et
- l'absorbant saturable comporte une structure InGaAs/InAlAs.

L'invention concerne également le procédé de démultiplexage mis en oeuvre sur un dispositif selon l'invention.

### PRESENTATION DES FIGURES.

D'autres caractéristiques et avantages de l'invention ressortiront de la description qui suit qui est purement illustrative et non limitative et qui doit être lue en regard des figures annexées sur lesquelles :
- la figure 1 représente un dispositif de démultiplexage selon l'invention ;
- la figure 2 est une représentation du signal se propageant dans la branche 2 du dispositif de la figure 1 ;
- la figure 3 est une représentation du signal se propageant dans la branche 7 du dispositif de la figure 1, en amont de l'absorbant saturable ; et
- la figure 4 est une représentation du signal se propageant dans la branche 7 du dispositif de la figure 1, en aval de l'absorbant saturable, à savoir le signal démultiplexé.

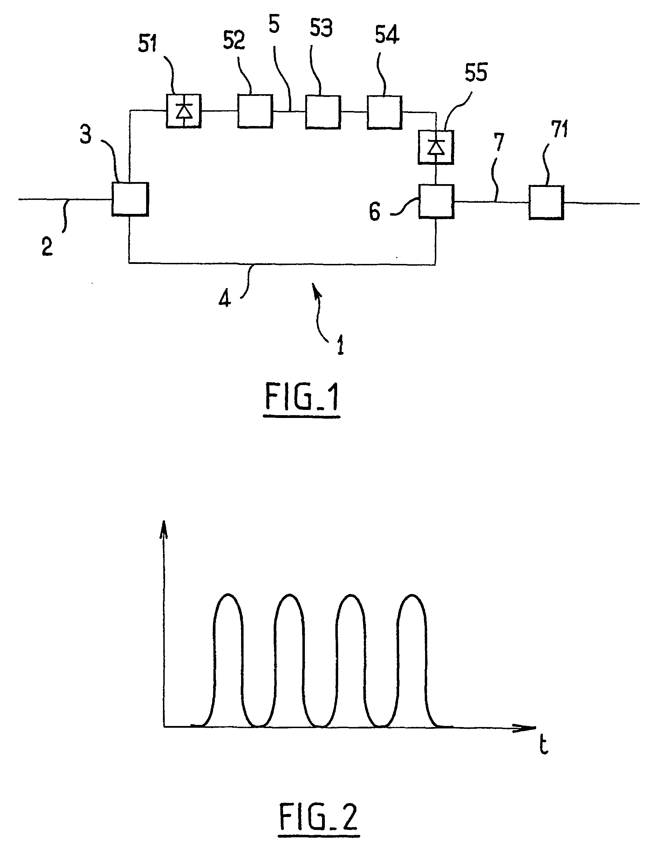

La figure 1 représente un dispositif 1 de démultiplexage comportant plusieurs branches.

Une branche 2 propage le signal optique à démultiplexer. Elle est divisée en deux branches 4 et 5 s'étendant entre deux coupleurs 3 et 6.

La branche 5 comporte des moyens de traitement de signal décrits plus en détail par la suite.

Après le deuxième coupleur 6, la branche 7 comporte des moyens de démultiplexage qui permettent d'obtenir un signal démultiplexé en sortie de la branche 7.

### DESCRIPTION DETAILLEE DU DISPOSITIF.

Le signal multiplexé se propageant dans la branche 2 a par exemple un débit binaire de 40 Gbit/s. Il est envoyé à un coupleur 3 50% / 50% qui dédouble le signal en deux signaux identiques. Les deux signaux se propagent alors dans deux branches 4 et 5.

La branche 5 comporte des moyens 51 formant photodiode transformant le signal lumineux issu du coupleur 3 en signal électrique apte à être traité.

Le signal électrique en sortie de la diode 51 est envoyé sur des moyens 52 aptes à reconstituer un signal d'horloge de synchronisation. Les moyens 52 permettent d'obtenir à leur sortie un signal ayant un taux de répétition identique au débit binaire du signal multiplexé. Les moyens 52 ont un facteur de qualité Q important. Le facteur de qualité est défini par le rapport de la fréquence centrale d'un filtre compris dans les moyens 52 - sensiblement 40 GHz - sur la largeur fréquentielle de la bande passante du filtre à -3dB. Le facteur de qualité des moyens 52 utilisés dans le dispositif est préférentiellement compris entre des valeurs égales à 500 et à 1000.

Le signal synchronisé est ensuite envoyé sur un diviseur de fréquences 53. Le diviseur de fréquence 53 pourra par exemple diviser la fréquence du signal issu de l'horloge 52 par un facteur multiple de deux. Le facteur de division est par exemple égal à quatre. On cherche alors à récupérer en sortie du dispositif 1 un signal ayant un débit binaire de 10 Gbit/s.

Le signal divisé en fréquence est envoyé vers un générateur de décalage temporel 54. A la sortie du générateur 54, le signal est légèrement en avance de phase par rapport au signal que l'on veut obtenir après le démultiplexage.

Le signal traité par les éléments 52, 53 et 54 commande un laser 55 générateur d'une sonde optique sous forme d'impulsions lumineuses. Cette sonde est une suite binaire qui n'est constituée que de « 1 ». Le taux de répétition de l'impulsion lumineuse représentative du « 1 » est par exemple quatre fois inférieur au débit binaire du signal multiplexé.

La sonde binaire est couplée au signal multiplexé qui s'est propagé dans la branche 4 s'étendant en sortie du coupleur 3 grâce à un coupleur 6.

La sortie du coupleur 6 est branchée à une branche 7 qui comporte des moyens 71 formant un absorbant saturable. Ce matériau absorbant à saturation rapide est connu en soi et ne sera pas décrit en détail par la suite. Il pourra comporter par exemple une structure InGaAs/InAIAs.

On récupère en sortie de l'absorbant 71 le signal démultiplexé que l'on voulait obtenir.

### PRINCIPE DE FONCTIONNEMENT.

La figure 2 montre le signal optique multiplexé - on parle alors de signal OTDM - entrant dans un dispositif de démultiplexage. Le signal à démultiplexer a par exemple un débit binaire de 40 Gbit/s.

Le signal à démultiplexer comporte par exemple quatre signaux multiplexés. On cherche à obtenir en sortie du dispositif 1 un de ces signaux.

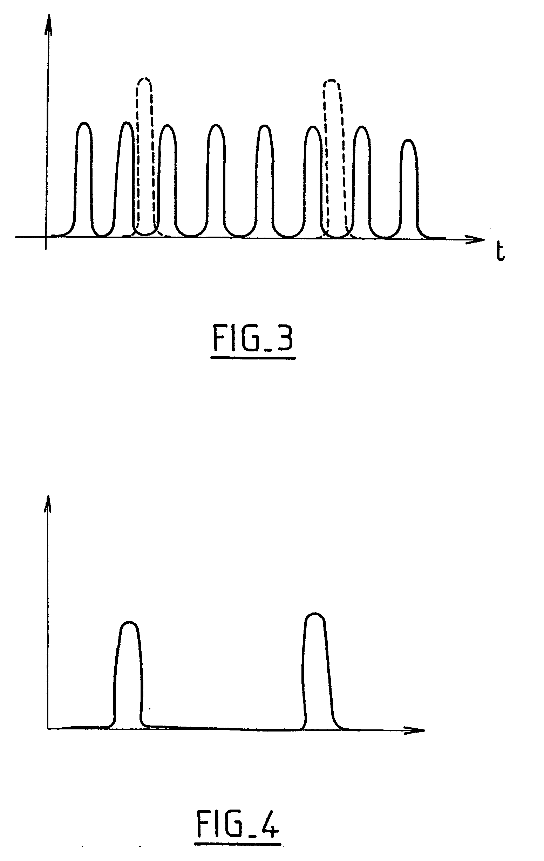

La figure 3 montre le signal résultant du couplage du signal issu de la source laser 55 et du signal se propageant dans la branche 4.

Le signal issu de la source laser a une fréquence quatre fois plus faible que le signal à démultiplexer. Il est de plus légèrement en avance de phase par rapport au signal que l'on cherche à obtenir en sortie du démultiplexage. Il possède également une intensité lumineuse apte à saturer l'absorbant saturable 71.

Ainsi, lors de l'arrivée du signal sonde sur l'absorbant saturable 71, l'énergie de la sonde est telle qu'elle sature rapidement l'absorbant saturable 71. L'absorbant 71 ainsi saturé est transparent pour le signal issu de la branche 4 qui arrive immédiatement après le pic de la sonde.

On récupère donc ce signal en sortie de l'absorbant 71.

Par contre la dé-saturation de l'absorbant 71 intervient rapidement. Ainsi, les impulsions du signal multiplexé qui ne sont pas immédiatement précédées par un pic de sonde sont absorbées par l'absorbant 71. On ne retrouve pas le signal absorbé en sortie de l'absorbant 71.

Des considérations énergétiques sont également à prendre en compte pour le signal à démultiplexer. Ce dernier doit avoir une intensité apte à passer au travers de l'absorbant saturé, mais également apte à être absorbée par l'absorbant quand un pic de sonde n'est pas présent immédiatement avant un pic de signal multiplexé.

La figure 4 montre le signal démultiplexé en sortie de l'absorbant 71. On obtient un signal ayant un débit binaire de 10 Gbit/s.

Les développements précédents concernent le démultiplexage d'un signal ayant un débit binaire de 40 Gbit/s. Mais l'invention pourra également s'appliquer au signaux ayant un débit binaire quelconque.

Préférentiellement, elle s'applique au débits binaires utilisés dans les différentes normes en usage dans les télécommunications par exemple 20 Gbit/s, mais également aux signaux ayant un débit de 160Gbit/s ou 640

Gbit/s.

## Revendications

1. Dispositif de démultiplexage temporel d'un signal optique comportant un premier coupleur (3) qui dédouble le signal optique à démultiplexer en deux signaux se propageant dans deux branches (4, 5) différentes du dispositif et un deuxième coupleur (6) qui réunit les signaux issus des deux branches (4, 5),
**caractérisé en ce qu'**une branche (5) comporte des moyens de traitement (51-55) pour obtenir à l'entrée du deuxième coupleur (6) un signal sous forme d'impulsions lumineuses ayant un taux de répétition fonction du signal que l'on veut obtenir en sortie du dispositif, ces impulsions étant légèrement en avance de phase par rapport au signal que l'on veut démultiplexer,
et **en ce que** l'intensité des impulsions lumineuses est apte à saturer un milieu absorbant (71) s'étendant après le deuxième coupleur, de sorte que le signal que l'on veut puisse passer le milieu absorbant.

2. Dispositif selon la revendication 1, **caractérisé en ce que** les moyens de traitement comportent des moyens (51) pour transformer le signal optique issu du premier coupleur (3) en un signal électrique, des moyens (52) de synchronisation pour que ledit signal électrique ait un taux de répétition identique au taux binaire du signal à démultiplexer, des moyens (53) diviseurs de fréquence, des moyens (54) pour introduire un décalage temporel entre les deux signaux se propageant dans les branches et une source laser (55).

3. Dispositif selon l'une des revendications 1 ou 2, **caractérisé en ce que** les moyens (51) de transformation du signal optique en signal électrique comportent une photodiode.

4. Dispositif selon les revendications 1 à 3, **caractérisé en ce que** les moyens (52) de synchronisation comportent des moyens aptes à reconstituer un signal d'horloge de synchronisation.

5. Dispositif selon la revendication 4, **caractérisé en ce que** les moyens formant horloge sont à grand facteur de qualité.

6. Dispositif selon l'une des revendications 1 à 5, **caractérisé en ce que** les moyens (53) diviseurs de fréquence divisent la fréquence du signal issu des moyens de synchronisation par un facteur multiple de deux.

7. Dispositif selon l'une des revendications 1 à 6, **caractérisé en ce que** la source laser (55) est commandée par le signal électrique dont la fréquence a été divisée et qui a été décalé.

8. Dispositif selon l'une des revendications 1 à 7, **caractérisé en ce que** l'absorbant saturable (71) comporte une structure InGaAs/InAlAs.

9. Procédé de démultiplexage temporel d'un signal optique selon lequel :
- on dédouble grâce à un premier coupleur le signal optique à démultiplexer en deux signaux,
- on injecte les deux signaux afin qu'ils se propagent dans deux branches différentes s'étendant après le premier coupleur,
- on réunit dans un deuxième coupleur les signaux issus des deux branches,
**caractérisé en ce que** :
- on traite un signal se propageant dans une des deux branches pour obtenir à l'entrée du deuxième coupleur un signal sous forme d'impulsions lumineuses ayant un taux de répétition fonction du signal que l'on veut obtenir en sortie du dispositif, ces impulsions étant légèrement en avance de phase par rapport au signal que l'on veut démultiplexer,
- on injecte les impulsions lumineuses en sortie du deuxième coupleur sur un milieu absorbant, l'intensité des impulsions issues du signal traité étant apte à saturer ledit milieu absorbant, le milieu ainsi saturé laissant passer les impulsions que l'on veut démultiplexer.

10. Procédé selon la revendication 9, **caractérisé en ce que** lors du traitement du signal dans l'une des deux branches de propagation :
- on transforme le signal optique issu du premier coupleur en un signal électrique,
- on synchronise ledit signal électrique de sorte qu'il ait un taux de répétition identique au débit binaire du signal à démultiplexer,
- on divise la fréquence du signal synchronisé,
- on introduit un décalage temporel entre les deux signaux se propageant dans les branches de sorte que le signal ainsi traité soit en avance de phase par rapport au signal que l'on veut démultiplexer,
- on génère des impulsions lumineuses commandées par la signal ainsi traité.

## Patentansprüche

1. Vorrichtung zum zeitlichen Demultiplexen eines optischen Signals, die einen ersten Koppler (3), der das zu demultiplexende optische Signal in zwei Signale aufspaltet, die sich in zwei verschiedenen Zweigen (4, 5) der Vorrichtung fortpflanzen, und einen zweiten Koppler (6), der die Signale nach den beiden Zweigen (4, 5) wieder zusammenführt, umfasst,
**dadurch gekennzeichnet, dass** ein Zweig (5) Verarbeitungseinrichtungen (51 - 55) zum Erzeugen eines Signals in Form von Lichtpulsen am Eingang des zweiten Kopplers (6) umfasst, die eine Wiederholungsrate haben, die von dem Signal abhängt, das am Ausgang der Vorrichtung erzeugt werden soll, wobei diese Pulse dem zu demultiplexenden Signal in der Phase etwas vorauseilen,
und dass die Intensität der Lichtpulse geeignet ist, ein Absorbermedium (71), das sich an den zweiten Koppler anschließt, in die Sättigung zu bringen, so dass das Signal, das erzeugt werden soll, das Absorbermedium passieren kann.

2. Vorrichtung nach Anspruch 1; **dadurch gekennzeichnet, dass** die Verarbeitungseinrichtungen Einrichtungen (51) zum Umwandeln des optischen Signals von dem ersten Koppler (3) in ein elektrisches Signal, Einrichtungen (52) zum Synchronisieren, damit das elektrische Signal eine Wiederholungsrate hat, die identisch zu der Bitrate des zu demultiplexenden Signals ist, Einrichtungen (53) zum Frequenzteilen, Einrichtungen (54) zum zeitlichen Verschieben zweier Signale zueinander, die sich in den Zweigen fortpflanzen, und eine Laserquelle (55) umfassen.

3. Vorrichtung nach einem der Ansprüche 1 oder 2, **dadurch gekennzeichnet, dass** die Einrichtungen (51) zum Umwandeln des optischen Signals in ein elektrisches Signal eine Fotodiode umfassen.

4. Vorrichtung nach einem der Ansprüche 1 bis 3, **dadurch gekennzeichnet, dass** die Einrichtungen (52) zum Synchronisieren Einrichtungen umfassen, die dazu dienen, ein Taktsignal zum Synchronisieren wiederherzustellen.

5. Vorrichtung nach Anspruch 4, **dadurch gekennzeichnet, dass** die Einrichtungen, die den Taktgeber bilden, einen hohen Gütefaktor haben.

6. Vorrichtung nach einem der Ansprüche 1 bis 5, **dadurch gekennzeichnet, dass** die Einrichtungen (53) zum Frequenzteilen die Frequenz des Signals, das von den Einrichtungen zum Synchronisieren kommt, durch einen Faktor teilen, der ein Vielfaches von zwei ist.

7. Vorrichtung nach einem der Ansprüche 1 bis 6, **dadurch gekennzeichnet, dass** die Laserquelle (55) durch das elektrische Signal gesteuert wird, bei dem eine Frequenzteilung und eine Verschiebung vorgenommen wurde.

8. Vorrichtung nach einem der Ansprüche 1 bis 7, **dadurch gekennzeichnet, dass** der sättigbare Absorber (71) eine In-GaAs/InAlAs-Struktur aufweist.

9. Verfahren zum zeitlichen Demultiplexen eines optischen Signals, bei dem:
- das optische Signal, das gedemultiplext werden soll, in einem ersten Koppler in zwei Signale aufgespalten wird,
- die beiden Signale in zwei unterschiedliche Zweige hinter dem ersten Koppler geleitet werden, in denen sie sich fortpflanzen,
- die Signale der beiden Zweige in einem zweiten Koppler wieder zusammengeführt werden,
**dadurch gekennzeichnet, dass**:
- ein Signal, dass sich in einem der beiden Zweige ausbreitet, verarbeitet wird, um am Eingang des zweiten Kopplers ein Signal in Form von Lichtpulsen zu erzeugen, die eine Wiederholungsrate haben, die von dem Signal abhängt, das am Ausgang der Vorrichtung erzeugt werden soll, wobei diese Pulse dem zu demultiplexenden Signal in der Phase etwas vorauseilen,
- die Lichtpulse am Ausgang des zweiten Kopplers in ein Absorbermedium eingekoppelt werden, wobei die Intensität der Pulse des verarbeiteten Signals geeignet ist, das Absorbermedium in Sättigung zu bringen, wobei das Medium, das so in Sättigung gebracht ist, diejenigen Pulse passieren lässt, die man demultiplexen möchte.

10. Verfahren nach Anspruch 9, **dadurch gekennzeichnet, dass** bei der Verarbeitung des Signals in dem einen der beiden Zweige für die Ausbreitung:
- das optische Signal von dem ersten Koppler in ein elektrisches Signal umgewandelt wird,
- das elektrische Signal derart synchronisiert wird, dass man eine Wiederholungsrate erhält, die identisch zu der Bitrate des zu demultiplexenden Signals ist,
- die Frequenz des synchronisierten Signals geteilt wird,
- eine zeitliche Verschiebung zwischen den beiden Signalen in den Zweigen derart erzeugt wird, dass das derart verarbeitete Signal demjenigen Signal in der Phase vorauseilt, das man demultiplexen möchte,
- Lichtpulse erzeugt werden, die von dem so verarbeiteten Signal gesteuert werden.

## Claims

1. Time-division demultiplexer apparatus for an optical signal, the apparatus comprising a first coupler (3) which splits the optical signal for demultiplexing into two signals propagating in two different branches (4, 5) of the apparatus, and a second coupler (6) which reunites the signals from the two branches (4, 5),
the apparatus being **characterized in that** one of the branches (5) includes processor means (51-55) for producing a signal at the inlet of the second coupler (6) in the form of light pulses having a repetition rate that is a function of the signal that is to be obtained at the output from the apparatus, said pulses being slightly early relative to the signal which is to be demultiplexed; and
**in that** the intensity of the light pulses is suitable for saturating an absorber medium (71) extending after the second coupler, so that the desired signal can pass through the absorber medium.

2. Apparatus according to claim 1, **characterized in that** the processor means comprise means (51) for transforming the optical signal from the first coupler (3) into an electrical signal, synchronizing means (52) so that said electrical signal has a repetition rate identical to the bit rate of the signal to be demultiplexed, frequency divider means (53), means (54) for imparting a time shift between the two signals propagating in the branches, and a laser source (55).

3. Apparatus according to claim 1 or claim 2, **characterized in that** the means (51) for transforming the optical signal into an electrical signal comprise a photodiode.

4. Apparatus according to any one of claims 1 to 3, **characterized in that** the synchronizing means (52) comprise means suitable for reconstituting a synchronizing clock signal.

5. Apparatus according to claim 4, **characterized in that** the clock forming means have a high Q factor.

6. Apparatus according to any one of claims 1 to 5, **characterized in that** the frequency divider means (53) divide the frequency of the signal from the synchronizing means by a factor which is a multiple of two.

7. Apparatus according to any one of claims 1 to 6, **characterized in that** the laser source (55) is controlled by the electrical signal whose frequency has been divided and which has been shifted.

8. Apparatus according to any one of claims 1 to 7, **characterized in that** the saturable absorber (71) comprises an InGaAs/InAlAs structure.

9. A method of time-division demultiplexing an optical signal, the method comprising the steps of:
· using a first coupler to split the optical signal for demultiplexing into two signals;
· injecting the two signals so that they propagate along two different branches extending from the first coupler; and
· reuniting the signals from the two branches in a second coupler;
the method being **characterized by** the steps of:
· processing the signal propagating in one of the two branches to obtain a signal at the input of the second coupler in the form of light pulses having a repetition rate that is a function of the signal that is to be obtained at the output from the apparatus, these pulses being slightly early relative to the signal that is to be demultiplexed; and
· injecting the light pulses output by the second coupler into an absorber medium, the intensity of the pulses coming from the processed signal being suitable for saturating said absorber medium, the medium as saturated in this way allowing the pulses that are to be demultiplexed to pass through.

10. A method according to claim 9, **characterized in that** processing of the signal in one of the two propagation branches comprises the following steps:
· transforming the optical signal from the first coupler into an electrical signal;
· synchronizing said electrical signal so that it has a repetition rate identical to the bit rate of the signal to be demultiplexed;
· dividing the frequency of the synchronized signal;
· imparting a time shift between the two signals propagating in the branches so that the signal as processed in this way is early relative to the signal that is to be demultiplexed; and
· generating light pulses under the control of the signal as processed in this way.
